# EUROPEAN PATENT APPLICATION

(11) **EP 1 164 496 A2**
(43) Date of publication of application: **19.12.2001**
(21) Application number: 01108069.4
(22) Date of filing: 29.03.2001
(51) Int. Cl.: G06F 17/15

(54) **Method and device for correlating signals**

(30) Priority: 29.05.2000 SE 0001998
(71) Applicant: Siemens-Elema AB, 171 95 Solna 1 (SE)
(72) Inventor: Wallius, Ted, 187 64 Täby (SE)

(57) **Abstract**

A digital signal correlator (DC) determines a correlation between bit values of a pulse train input signal and bit values which define a plurality of rising and/or falling edges of pulses of a reference pulse train a plurality of times. Each time the relative location of the two sets of bit values is effectively displaced by one bit. The correlator (DC) comprises a plurality of parallel comparators (MEM1,MUX1,C1; MEM2,MUX2,C2; MEM3,MUX3,C3; MEM4,MUX4,C4) each for receiving and holding in a memory (MEM1..MEM4) a different segment of the input pulse train. Each comparator is configured to calculate a correlation value at a bit location by varying a correlation value at the immediately preceding bit location which is held in a counter (C1..C4) dependent on the bit values of the input pulse train corresponding to the ends and centre of the associated defined pulse edge at the immediately preceding location.

## Description

The present invention relates to a method and device for the correlation of signals and in particular to a method and device for the digital correlation of an input signal with a reference signal.

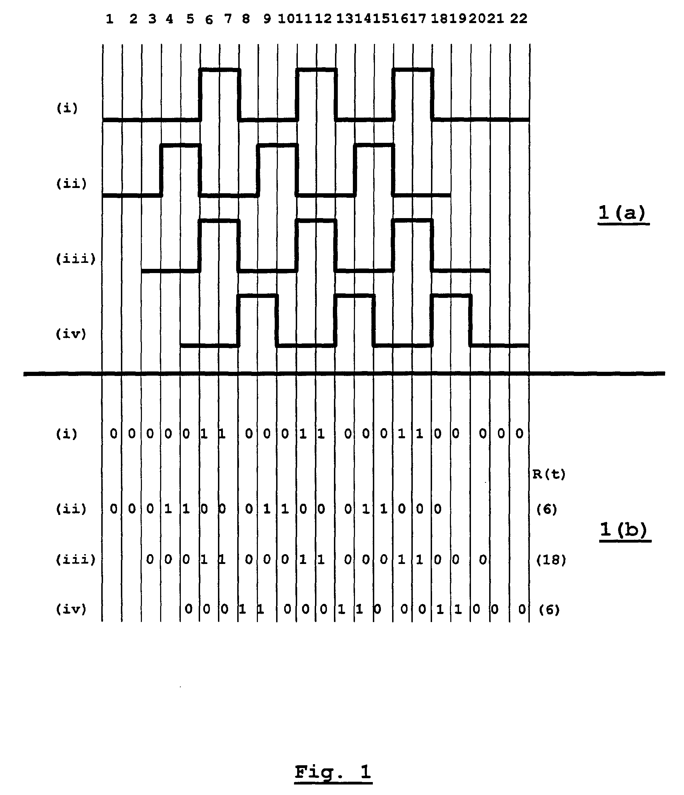

A correlator is a device capable of detecting the presence of a finite length replica of a signal within a relatively long input signal. In particular a digital correlator is a device capable of detecting the presence of a replica of a finite length binary code reference sequence in a relatively long digital input sequence. This device may be used, for example, in code detection; to discriminate periodic input signals from noise to improve signal detection; or in determining the arrival time of a signal. Generally, the digital correlator operates by comparing the reference sequence with the input sequence a plurality of times and the number of matches at each time is usually taken as a measure of the correlation between the signals (see Fig.1).

Each time the reference sequence is shifted by one additional binary element with respect to the input sequence a correlation coefficient, being the number of matching elements, is compared with an earlier correlation coefficient in order to determine a maximum correlation coefficient. This maximum correlation coefficient may then be compared with a threshold value to differentiate a true signal from noise. The number of binary elements displacement required to reach the element position giving this maximum is an indication of a time (or phase) shift between the reference and the input sequences and may be used in determining the arrival time of the input signal.

However, this correlation process becomes very processor intensive when a large number of comparisons have to be made and can lead to an increased time required to make the correlation determination or may require the use of faster, more expensive components.

According to a first aspect of the present invention there is provided a method of correlating in a correlator an input pulse train and a reference pulse train through the comparison of the input train with a reduced data representation of the reference pulse train which defines only a plurality of characteristic portions, such as the rising or falling flanks of the pulses, at different temporal locations. The overall correlation is determined from the combined correlations of all of the characteristic portions and the corresponding portions of the input pulse train. In this manner the number of comparisons which are needed to be made at each temporal location is reduced.

Usefully, the input pulse train may be divided into a plurality of segments, such as for example to each contain only one pulse, and the correlation between a corresponding segment and characteristic portion is determined for all of the portions in parallel. This reduces the time taken for the overall correlation to be made at any time location as compared to a serial comparison and may permit the use of slower, less expensive, components in the correlator.

In a preferred embodiment of the method the comparison is carried out in the digital domain wherein a plurality of binary elements constitute the input pulse train and a further plurality of binary elements define each of the characteristic portions, such as the rising edges of the pulses of the reference pulse train. This allows a determination of the overall correlation to be made which comprises the steps of determining a first number of matches at a first of the plurality of temporal locations by comparing the values of binary elements of the input pulse train with values of corresponding binary elements of the reference signal and preferably only each of the characteristic portions; relatively displacing the elements of the input pulse train and the reference pulse train by an element for each of the remaining plurality of temporal locations and calculating the number of matches at each temporal location from the number of matches at the immediately preceding location and the values of binary elements of the input pulse train corresponding to the ends and centre of each characteristic portion at the preceding location.

In this manner only a single comparison between input pulse train and the reference pulse train needs be performed and thereafter only the values of the input pulse train at three locations for each characteristic portion needs be determined. Such a calculation of the overall correlation significantly reduces demand on the numerical processors.

According to a second aspect of the present invention there is provided a digital signal correlator comprising numerical processing elements adapted to carry out the preferred embodiment of the method according to the first aspect of the invention.

Exemplary embodiments of both aspects of the present invention will no be described with reference to the drawings of the accompanying figures of which:
Fig.1 illustrates the prior art sequence matching correlation method.
Fig.2 illustrates a specific example of the prior art matching correlation method using four pulses of a 200kHz reference pulse train.
Fig.3 illustrates the method of the present invention in which a reduced data representation of the reference pulse train is employed.
Fig.4 illustrates the method of the present invention utilising parallel processing to determine the overall correlation.
Fig.5 illustrates the effect on the correlation determination of a single bit displacement of a step representation of a rising edge of an ideal pulse.
Fig. 6 illustrates a digital correlator adapted to perform an embodiment of the method according to the present invention.

Figure 1 illustrates generally an example of the known matching correlation method in which a rectangular wave input signal (Fig. 1a(i)), sampled as 22 (bit positions 1 to 22) bit length binary elements, is to be compared a plurality of times to a rectangular wave reference sequence consisting of 18 binary elements. The reference sequence is shown for correlation, R(t), at a time, t, corresponding to bit position 1 (Fig. 1a(ii)); at a later time at bit position 3 (Fig. 1a(iii)) and at a final time at bit position 5 (Fig. 1a(iv)). These signals a(i), a(ii), a(iii) and a(iv) are represented digitally in Fig. 1b(i), b(ii), b(iii) and b(iv) respectively.

As shown in this Fig. 1b, when the reference sequence is located at bit position 1 with respect to the bit positions of the input signal (Fig.1b(ii)) there is a correlation value of 6 which is determined as the number of matching bit values between the input signal (i) and the reference sequence (ii). When the reference sequence is located at bit position 3 (Fig. 1b(iii)) the correlation is 18, which in this example is a maximum and when at bit position 5 (Fig. 1b(iv)) the correlation is 6. Knowing the sampling frequency then the bit position of the maximum correlation, Rmax, can be transformed into an arrival time for the input signal (i).

To highlight the inventive advantages of the method according to the present invention a specific case is now considered. This involves the determination of the correlation of an output from an ultrasound piezoelectric transmitter, which is detected as an input signal by a corresponding receiver, and a reference signal representing the expected input signal. It is well known that a single energising electrical pulse supplied to the transmitter will cause the transmitter to generate a pulse train comprising of typically four or more pulses at a known frequency which is here taken to be 200kHz. The number of pulses and frequency depends, to some extent, on the physical properties of the piezoelectric crystal used but may be easily calculated or measured for a specific crystal. It has been discovered that a correlation of four pulses, most preferably those expected to have the four highest signal amplitudes, within an input signal is sufficient to verify the presence of an ultrasound pulse train within an input signal.

Assuming that the input pulse train can be sampled and digitised at a speed of 133 megabits per second (Mb/sec) and that the reference pulse train also comprises four pulses then each of the four pulses of either pulse train may contain in the region of 666 samples so that the input pulse train (and also the reference pulse train) may contain a total of 2665 bit length binary element samples.

In order to ensure that the reference pulse train can be temporally aligned with the input pulse train, if present in the input signal, it is preferable to sample the input signal for a time longer than the duration of the input pulse train. In this case the input and the reference pulse trains are relatively displaced through a time window which exceeds the expected size of the input pulse train (a greater number of bits than the expected 2665 bits). It will be assumed for ease of description that it is the reference pulse train that is displaced temporally through the time window.

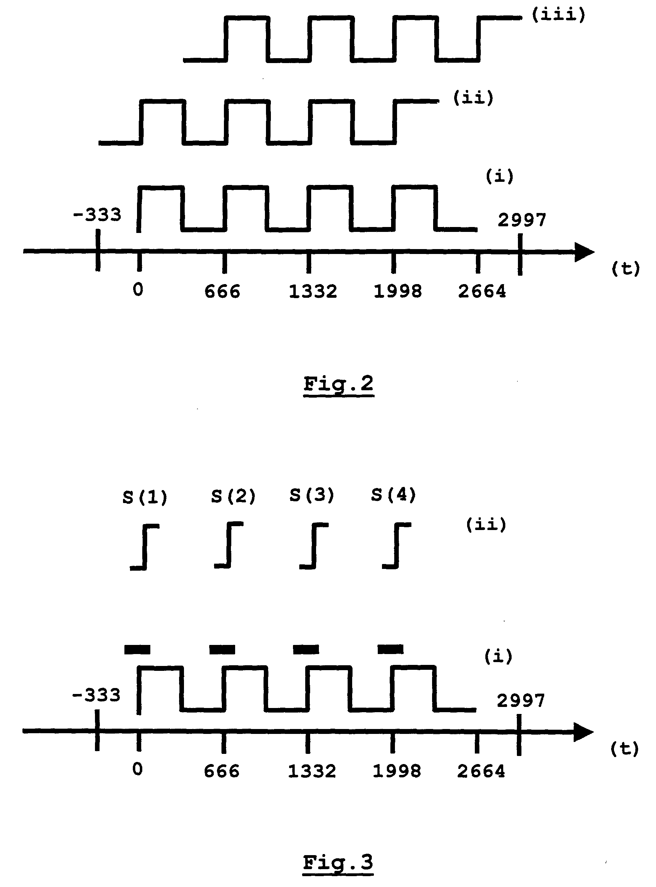

Fig. 2 shows the bit-position representation of the time window which exceeds the expected number of bits for the input pulse train by ±333 bits to total 3330 bits. A bit-position representation of the square wave input pulse train for which a correlation is sought is also shown located (i) in the time window at a time equivalent to bit position 0 and stretches to bit position 2664.

The reference pulse train consists of a series of 333 zeros, 333 ones; 333 zeros, 333 ones; 333 zeros, 333 ones; and 333 zeros, 333 ones.

According to the known method, this reference pulse train is initially set to start at bit position -333 (equivalent to a time, t=0), as shown by the line (ii) in Fig. 2, and a bit-wise comparison is made of corresponding bits of the two pulse trains to determine an overall correlation, R(0), at time zero. The beginning of the reference train is then displaced one bit to start at bit position -332 and a new comparison is made to determine an overall correlation, R(1), at this time. This process is repeated until the start position has been displaced 666 steps to place the end of the reference pulse train at the final bit location of the time window, as shown by the line (iii) of Fig. 2. A comparison of all overall correlations, R(t), which were determined at each of the plurality of times, t, is made to determine a maximum correlation, Rmax. An examination of the value of the maximum correlation Rmax can enable a decision to be made as to whether or not a true ultrasound signal has been detected. If this is value is 2664, being the number of bits of the reference pulse train, then a total alignment of input pulse train and reference pulse train was found. Moreover, the bit position of the start of the reference pulse train at which the Rmax was determined can be used in the determination of the arrival time of the input pulse train.

This process involves in the region of 1.8 million operations. However, since the sampling is carried out at a clock frequency of 133 MHz and if it is required to determine the maximum correlation in a millisecond, only 133,333 operations are available (assuming one operation requires 1 clock cycle) and the normal correlation method will not function.

In arriving at the method according to the present invention the inventor has realised that there is no need to actually compare the entire input pulse train at every bit displacement. It is here sufficient to compare information around the rising and/or fall edges of each pulse of the pulse train as shown by the broad line in Fig 3 (i). To determine a correlation in this case requires the use of a reduced data representation of the reference pulse train of Fig. 2(ii) which defines, for example, only the rising edges of the pulse train. As shown in Fig 3 (ii) the reference pulse train now comprises a series of 4 steps, S(1)..S(4), each one of which consists of 32 zeros and 32 ones and each step separated by 666 steps (equivalent to one wavelength).

The determination of an overall correlation for each displacement of the start of the ideal pulse train from bit position -333 proceeds as described above with respect to Fig. 2. This process now involves in the region of 170,000 operations which is still somewhat outside the 133,333 operations available but still some 10 times less than the operations required by the known method of Fig. 2.

The inventive method may be further improved when the input pulse train is divided into segments, each containing one of the pulses to be compared with a corresponding one of the steps, S(1)..S(4), which make up the reduced data reference pulse train.

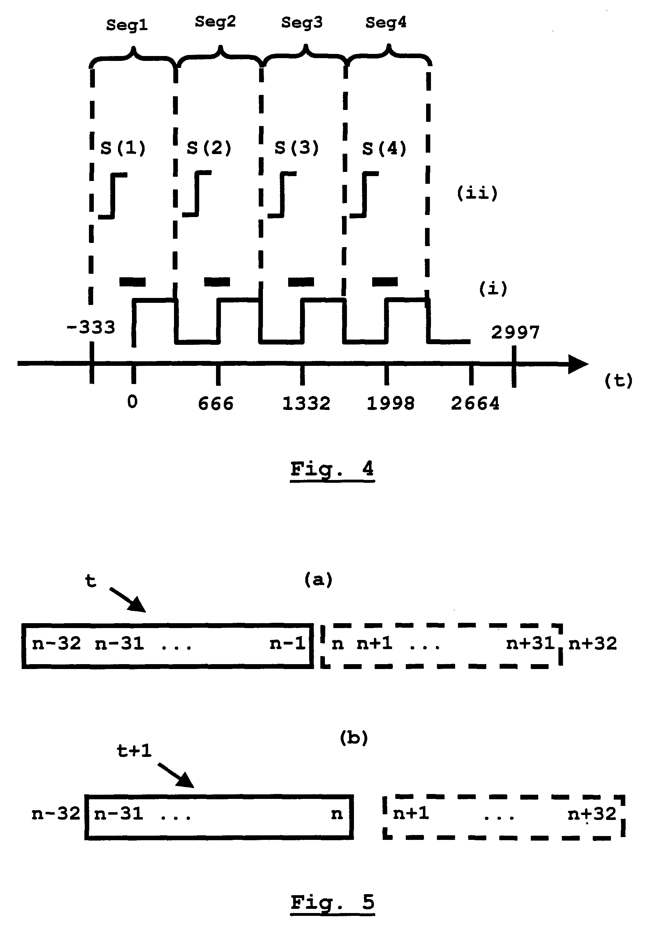

Thus, as shown in Fig. 4 for the input pulse train (i) which starts at window bit location 0, a segment Seg1 comprises the data bits -333 to +332 and is correlated with a corresponding first reference step S(1) of the reference pulse train (ii) over this range; a segment Seg2 comprises the data bits +333 to +998 and is correlated with a corresponding second reference step S(2) of the reference pulse train (ii) over this range; a segment Seg3 comprises the data bits +999 to +1664 and is correlated with a corresponding third reference step S(3) of the reference pulse train (ii) over this range; and a fourth segment Seg4 comprises the data bits +1665 to +2330 and is correlated with a corresponding fourth reference step S(4) of the reference pulse train (ii) over this range.

The correlation, r1(t),r2(t),r3(t),r4(t), of every segment, Seg1..Seg4, is carried out in parallel and added to provide the determination of the overall correlation, R(t). This reduces by three quarters the time required to determine the overall correlation, R(t), across the entire time window at each of the plurality of temporal locations, t.

In making a further inventive reduction of the number of numerical operations required to arrive at an overall correlation R(t) the inventor has appreciated that each time a 64 bit step, as shown in Fig. 3(ii), comprising 32 zeros and 32 ones, is displaced by one bit within the time window the correspondence between the input pulse train and the step will only change at each end of the step and in the middle of the step, that is the bit position which changes from a one to a zero as the step is displaced. This is illustrated in Fig. 5 where a step of the reference pulse train is shown as two rectangles, a first, broken lined one demarking the 32 ones (shown generally to correspond to bits n to n+31 within the time window) and a second solid lined one, demarking the 32 zeros (shown generally to correspond to bits n-1 to n-32 within the time window). Fig. 2 (a) shows this step at a time t within the time window for acquiring the input signal. When this step (a) is displaced one bit to correspond to a time t+1 within the time window the step begins at bit position n-31 as is shown in Fig. 2(b). It can be seen from a comparison of the two figures (a) and (b) that it is the correlation at the end points and in the middle of the step which varies for a bit-wise displacement of the reference step.

Considering the first step S(1), the correlation r1(t+1) can be calculated from a knowledge of the correlation r1(t) for the step S(1) at the immediately preceding bit position by the algorithm:
a) Reduce r1(t) by 1 if the value of the input pulse train at bit position n-32 is a zero;
b) Increase r1(t) by 1 if the value of the input pulse train at bit position n is a zero;
c) Reduce r1(t) by 1 if the value of the input pulse train at bit position n is a one;
d) Increase r1(t) by 1 if the value of the input pulse train at bit position n+31 is a one.

This resulting value is the correlation r1(t+1) and the algorithm is done for each of remaining steps S(2)..S(4).

The very first correlation r(0) for each step S(1)..S(4) clearly cannot be calculated in this manner since an immediately preceding correlation does not exist and therefore the first correlation r(0) must be determined in the conventional manner by comparing at least corresponding bit values of the input pulse train and each step. The number of matching bits for a step will give the correlation r(0).

It is to be remembered that the overall correlation, R(t+1), is given by the sum of the individual correlations r1(t+1),r2(t+1),r3(t+1),r4(t+1) of each of the individual steps (in the present example 4 steps) which describes the reference pulse train.

Carrying out this method of determining the overall correlation R(t+1) at every temporal (bit) location by calculation reduces the total number of operations from the 170000 necessary for the method described above in respect of Fig. 3 to around 5000 operations. As described above with respect to Fig.4 this method of calculation may also be advantageously carried out in parallel for each of the segments of the input signal.

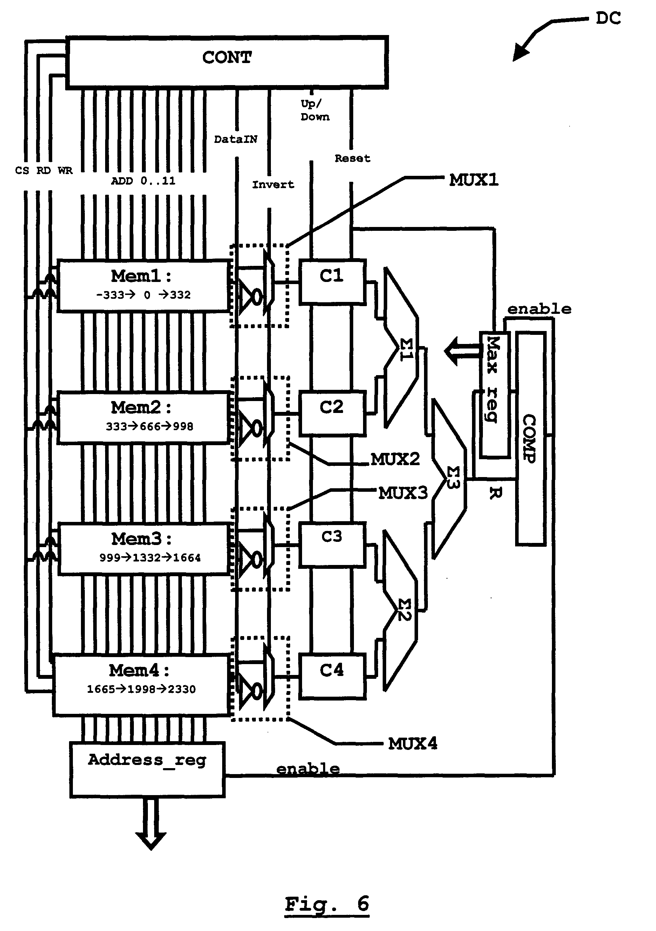

A digital correlator comprising numerical processor components adapted to carry out the method according to Fig. 5 in a parallel manner is illustrated in Fig. 6. The correlator, DC, is optimized for finding four pulses with the frequency of 200 kHz and is therefore usable to detect the presence of an ultrasound pulse in the input signal of the example described above with reference to Figs. 2 to 5. The result of operating this correlator, DC, will be the address position that best fits the reference pulse train. With reference to Fig. 6, The digital correlator is provided with four 2048 bit addressable memories, Mem1..Mem4, into which data representing the input signal may be provided along the line DataIN. The line CS controls memory chip, Mem1..Mem4, select; the line RD controls a memory, Mem1..Mem4, read operation; and the line WR controls a memory, Mem1..Mem4, write operation; as is common in the art. Units, MUX1..MUX4, are operably connected to corresponding memories Mem1..Mem4 to receive the bit value of a particular memory location which are selectable by signals on the eleven memory address lines ADD 0..11. The units MUX1..4 are each configured to provide an output dependent on the received memory bit value and the signal on the Invert line which is varied so that a correlation between the input pulse train and the reference pulse train is effected. Counters, C1..C4, are connected to receive the output from the corresponding unit, MUX1..MUX4 and to output a correlation value, r1..r4 between the part of the input signal which is stored in the corresponding memory, Mem1..Mem4, and the corresponding part of the reference pulse train. The operation of the counters C1..C4 are controlled by signals on the line, Up/Down. Adders Σ1..Σ3 are arranged to combine the output correlation values, r1..r4, and provide an overall correlation value, R, to a comparator, COMP, where it is compared with a current maximum overall correlation, Rmax, which is stored in a register, Max_reg. The comparator, COMP, is configure to provide an "enable" signal to the register, Max_reg, and to a further register, Address_reg, if the results of the comparison indicate that the provided correlation value, R, is greater than the current maximum value, Rmax. On receipt of this enable signal the register, Max_reg, stores the correlation value, R, as the new maximum value, Rmax, and the further register, Address_reg, stores the memory address location of this new maximum correspondence. The contents of either one or both of these registers, Max_reg, Address_reg, may be usefully output for use outside the digital correlator, DC. A microprocessor controller, CONT, is configured to control the signals present on the lines CS, RD, WR, ADD0..11, Invert, Up/Down, to control the correlation operation. As mentioned above, and described more fully below, the signal on the Invert line depends on the reference pulse train and so the controller, CONT, effectively "stores" the reference pulse train.

Remembering that, as mentioned above, using a sampling rate of 133 Mb/sec a 200 kHz pulse is 666 bits long then the correlator, DC, operates as follows:
a) A value WR='1' and RD='0' is provided which allows data bits to be written to (received in) the four memories Mem1, Mem2 Mem3, Mem4. The counters C1,C2,C3,C4 and the register Max_reg for holding the maximum value of the overall correlation Rmax are reset by setting the line R='1'. In the present example the register Max_reg is reset to hold an initial value of Rmax of 0. This initial value may be set to some higher value, representing a threshold value, which a determined overall correlation must exceed before a value of Rmax is registered.
b) A value of CS="0001" is placed on the CS line which activates only the first memory Mem1. The memory Mem1 samples data from the input signal received from an ultrasound receiver (not shown) and conditioned in a conditioning unit (not shown) common in the art which converts the typical analogue "sine" wave input signal to a rectangular wave representation in which all negative signals are given a value zero and all positive signals are given a value 1 during a time window containing 3330 bits as described with respect to Fig. 2 which is present on the line DataIN. The addresses 0**→**666 in Mem1 will then receive the input bits from -333 to 332.
c) Then a value of CS="0010" is placed on the CS line and the second memory, Mem2, becomes activated. The addresses 0→666 in Mem2 will then receive the bits from 333 to 998.
d) A value of CS="0100" is provided and the third memory, Mem3 becomes activated. The addresses 0→666 in Mem3 will then receive the bits from 999 to 1664.
e) A value of CS="1000" is then provided and the fourth memory, Mem4, becomes activated. The addresses 0→666 in Mem4 will then receive the bits from 1665 to 2330.
f) Next values of CS="1111", WR='0' and RD='1' are entered on the respective lines which allows a reading from all the four memories, Mem1..4, at the same time. Thus, if a specific position is addressed then the stored bits from all the four memories Mem1..4 at this position can be obtained.
g) Firstly R(0) must be determined. The addresses 0→31 in each memory, Mem1..4, are addressed in parallel and the bits at these address positions are inverted in a corresponding multiplexor unit, MUX1..4. This procedure rewards zeroes by turning them into ones that can affect the counters C1..4 (Each counter C1..4, is arranged to only count with ones, with zeroes nothing happens). The counters C1..4 will count up, if fed with ones:
   Up/down='1'.
h) Next the addresses 32→63 are addressed in each memory, Mem1..4, in parallel and these bits are non-inverted in the corresponding multiplexor unit, MUX1..4. This procedure reward ones and the counters C1..4 will count up, if fed with ones: Up/down='1'.
i) The result from all the four counter C1..4 which represent the individual correlations r1..4 (0) are added in adders, Σ1..3 to determine R(0). This value R(0) is compared in a comparator, COMP, to the value of Rmax in the register Max_reg. Since, in this case, Rmax was set to zero at step a) the value R(0) will be stored in the register Max_reg when an "enable" signal turns to one. At this time the enable signal turns on a register, Address_reg, to store the address-position for the Rmax stored in Max_reg , that is, position 0.
j) Now the calculation of R(1) is performed. Remembering that the four counters C1..4 each contains a part, r1..4 (0), of the overall correlation R(0) and that the same operations occur in all the memories Mem1..4 and counters C1..4 in parallel. The content of the address 0 of each memory Mem1..4 is taken and inverted in the corresponding unit, MUX1..4 . The counters C1..4 are set to count down. This means that the part, r1..4 (0) of R(0) that is contained in the each of the corresponding four counters, C1..4, will decrease by one if there was a zero at this address-position.
k) The content of each of the addresses 32 is taken and inverted in the corresponding multiplexor unit, MUX1..4. The counters C1..4 are set to count up. This means that the part, r1..4 (0) of R(0) that is contained in each of the corresponding four counters, C1..4, will increase by one if there was a zero at this address-position.
l) The content of each of the addresses 32 is again taken but without inversion in the corresponding unit, MUX1..4. The counters C1..4 are set to count down. This means that the part, r1..4 (0) of R(0) that is contained in each of the corresponding four counters, C1..4, will decrease by one if there was a one at this address-position.
m) The content of each of the addresses 65 is taken without inversion in the corresponding unit, MUX1..4. The counters C1..4 are set to count up. This means that the parts r1..4(0), of R(0) that is contained in each of the corresponding four counters C1..4 will increase by one if there was a one at this address-position.
n) The adders Σ1..3 add the parts (now r1..4 (1)) from the four counters c1..4 to calculate the overall correlation R(1) at location 1. This is done in parallel. This new value R(1) is compared with the one, R(0) stored in Max_reg. If it is greater than Max_reg then enable goes to one and contents of Max_reg is replaced with R(1) to become the new Rmax. At the same time Address_reg will store the address=1 instead. If the new value R(1) is less than the contents of Max_reg then nothing happens.
o) The steps j-n are repeated 665 times, each time with the value R(0) being replaced with the immediately preceding calculated correlation value and with the addresses in those steps increased by one every time. In this manner new values of the overall correlation R will be calculated for each of the remaining address positions, for example the next time, R(2) will be calculated, using the address positions address=1, address=33, address=33 and address=66.

In this way the address positions will be shifted 665 times to sample in parallel all address locations in each of the memories, Mem1..4. The maximum correlation Rmax will be stored in the register Max_reg from where it may be output to be used, for example, within other circuitry to determine whether a received input signal contained a true ultrasound pulse signal. The address location of Rmax will be stored in the register Address_reg. This location can be output, perhaps dependent on the value of Rmax output from the register, Max_reg, indicating the presence of an ultrasound pulse, and used to calculate the arrival time of the ultrasound pulse as detected by the receiver (not shown).

It will be appreciated that, when operated according to the steps (g),(h),(i) above, the correlator, DC, will calculate a value of an initial overall correlation, R(0) which is based on a comparison of the reference pulse train as represented by the reduced data data-set. The correlator could be readily modified to calculate this initial correlation R(0) based on a comparison of a complete data data-set (which is in this case 2665 binary element samples) that fully defines the reference pulse train whilst remaining within the scope of the invention as claimed.

The method of determining the overall correlation R(t+1) by calculation as described with respect to Fig. 5 is made assuming the use of rising edges to define the pulses of the reference pulse train. In circumstances where falling edges are used, either alone or in combination with rising edges, then the algorithm for calculating the correlation r1(t+1) for the step (1) from a knowledge of the correlation r1(t) for the step (1) at the immediately preceding bit position is changed to:
a) Reduce rl(t) by 1 if the value of the input pulse train at bit position n-32 is a one;
b) Increase r1(t) by 1 if the value of the input pulse train at bit position n is a one;
c) Reduce r1(t) by 1 if the value of the input pulse train at bit position n is a zero;
d) Increase r1(t) by 1 if the value of the input pulse train at bit position n+31 is a zero.

Again, this is repeated for each of the remaining steps (2)..(4) and an overall correlation R(t+1) is determined by combining the individual correlations of each step.

It will be appreciated by those skilled in the art that the method and circuit which is described above for use in identifying the presence of four pulses within a time window can be readily extended to any number of pulses and the width of the steps used to define the rising and falling edges of each pulse of the reference pulse train can be varied according to different durations of pulses which constitute the reference pulse train without departing from the invention as claimed.

It will also be appreciated that whereas the digital correlator, as described above with reference to Fig. 6, is implemented in hardware it would be possible to implement using standard programming techniques the method according to the present invention as software code portions of a computer program product which when loaded into the internal memory of a computer and run would cause the computer to perform the steps of the method.

## Claims

1. A method of determining in a correlator a correlation between an input pulse train and a reference pulse train comprising the steps of:
receiving the input pulse train into the correlator;
providing within the correlator the reference pulse train;
determining an overall correlation of input pulse train with the reference pulse train for each of a plurality of different relative temporal locations of the reference and the input pulse trains; and
establishing a maximum overall correlation from the determined overall correlations;
**characterised in that**
determining an overall correlation comprises determining a correlation of the input pulse train with a reduced data representation selected to define a plurality of characteristic portions of the reference pulse train and combining the determined correlations to produce the overall correlation.

2. A method as claimed in Claim 1 **characterised in that** the characteristic portions consists of a rising or falling flanks of pulses constituting the reference pulse train.

3. A method as claimed in Claim 1 or Claim 2 **characterised in that** there is further provided the steps of:
dividing the input pulse train into a plurality of segments corresponding to the plurality of characteristic portions; and
determining in parallel the correlation of each characteristic portion with the corresponding segment of the input pulse train.

4. A method as claimed in any preceding claim
**characterised in that**
determining the overall correlation comprises the steps of:
comparing the values of binary elements constituting the input pulse train with values of corresponding binary elements constituting the reference pulse train to determine a first number of matches at a first of the plurality of temporal locations; and
calculating the number of matches for each of the remaining plurality of temporal location from the number of matches at the immediately preceding location and values of binary elements of the input pulse train corresponding to the ends and centre of each characteristic portion of the reference pulse train at the preceding location.

5. A method as claimed in Claim 4 **characterised in that** the reduced data representation comprises a first number of binary elements before and a second number of binary elements after rising flanks of pulses constituting the reference pulse train; and **in that**
calculating the number of matches for each of the remaining plurality of temporal locations comprises the steps of:
reducing the immediately preceding number of matches by one if an input pulse train binary element corresponding to the beginning of the first number of binary elements at the preceding location is zero;
increasing the immediately preceding number of matches by one if an input pulse train binary element corresponding to the beginning of the second number of binary elements at the preceding location is zero;
reducing the immediately preceding number of matches by one if an input pulse train binary element corresponding to the beginning of the second number of binary elements at the preceding location is one; and
increasing the immediately preceding number of matches by one if an input pulse train binary element corresponding to the end of the second number of binary elements at the preceding location is one.

6. A method as claimed in Claim 4 **characterised in that** the reduced data representation comprises a first number of binary elements before and a second number of binary elements after falling flanks of pulses constituting the reference pulse train; and **in that** calculating the number of matches for each of the remaining plurality of temporal locations comprises the steps of:
reducing the immediately preceding number of matches by one if an input pulse train binary element corresponding to the beginning of the first number of binary elements at the previous location is one;
increasing the immediately preceding number of matches by one if an input pulse train binary element corresponding to the beginning of the second number of binary elements at the previous location is one;
reducing the immediately preceding number of matches by one if an input pulse train binary element corresponding to the beginning of the second number of binary elements at the previous location is zero; and
increasing the immediately preceding number of matches by one if an input pulse train binary element corresponding to the end of the second number of binary elements at the preceding location is zero.

7. A computer program product directly loadable into the internal memory of a digital computer, comprising software code portions for configuring the computer to perform the steps of the method of any of the Claims 4 to 6 when the product is run.

8. A digital signal correlator (DC) comprising means adapted to implement the steps of the method according to any of the Claims 4 to 6.

9. A digital signal correlator (DC) for determining a correlation between binary elements of a pulse train input signal and binary elements of a reference pulse train, the correlator (DC) comprising
comparison means (MEM1..MEM4,MUX1..MUX4,C1..C4,Σ1..Σ3) adapted to receive and hold (MEM1..MEM4) the binary elements representing the input pulse train and to determine during each of a plurality of comparison cycles an overall correlation (Σ1..Σ3) of input pulse train with the reference pulse train dependent on the number of matching values (MUX1..MUX4,C1..C4) of corresponding binary elements of the input pulse train and the reference pulse train;
control means (CONT) for relatively shifting the location of the input pulse train and the reference pulse train by a binary element for each comparison cycle;
and means (COMP) for determining a maximum overall correlation from the overall correlations of each comparison cycle; **characterised in that**
the comparison means (MEM1..MEM4,MUX1..MUX4,C1..C4, Σ1..Σ3) is adapted to determine the overall correlation by matching values of corresponding binary elements of the held input pulse train and a reduced data representation defining a plurality of characteristic portions of the reference pulse train.

10. A digital signal correlator as claimed in claim 9
**characterised in that** the comparison means (MEM1..MEM4,MUX1..MUX4,C1..C4,Σ1..Σ3) comprises a plurality of comparators (MEM1,MUX1,C1; MEM2,MUX2,C2; MEM3,MUX3,C3; MEM4,MUX4,C4) each adapted to receive and hold (MEM1..MEM4) a different segment of the input pulse train and to operate in parallel to each determine the number of matching values of corresponding binary elements of the held segment and of a different one of the plurality of characteristic portions (MUX1,C1; MUX2,C2; MUX3,C3; MUX4,C4); and to combine (Σ1..Σ3) each determined number to establish the overall correlation.

11. A digital signal correlator as claimed in Claim 9 or Claim 10 **characterised in that** the comparison means (MEM1,MUX1,C1; MEM2,MUX2,C2; MEM3,MUX3,C3; MEM4,MUX4,C4) is adapted to store the number of matching values for a comparison cycle and to calculate a number of matching values for a next comparison cycle dependent on the stored number and values of binary elements of the input pulse train corresponding to the ends and centre of each characteristic portion of the reference pulse train.
